# EUROPÄISCHE PATENTSCHRIFT

(11) **EP 1 747 601 B1**
(45) Veröffentlichungstag und Bekanntmachung des Hinweises auf die Patenterteilung: **21.11.2012**
(21) Anmeldenummer: 05717087.0
(22) Anmeldetag: 17.03.2005
(51) Int. Cl.: H02J 7/00

(54) **LADUNGSABGLEICH EINER BLOCKWEISE AUFGETEILTEN BATTERIE**
CHARGE EQUALIZATION OF A BATTERY, DIVIDED INTO BLOCKS
EGALISATION DE CHARGE D'UNE BATTERIE DIVISEE EN BLOCS

(30) Priorität: 13.05.2004 DE 102004023542
(43) Veröffentlichungstag der Anmeldung: 31.01.2007
(73) Patentinhaber: ROBERT BOSCH GMBH, 70442 Stuttgart (DE)
(72) Erfinder: GROB, Ferdinand, 74354 Besigheim (DE); FASSNACHT, Jochen, 78713 Schramberg (DE)
(86) Internationale Anmeldenummer: PCT/EP2005/051231
(87) Internationale Veröffentlichungsnummer: WO 2005/112181

(56) Entgegenhaltungen:
- WO-A1-2004/030177
- JP-A- 3 056 040
- JP-A- 2002 218 667
- US-A1- 2004 222 771
- KUTKUT, N.H.; DIVAN, D.M.: "Dynamic equalization techniques for series battery stacks" INTELEC '96. 18TH INTERNATIONAL TELECOMMUNICATIONS ENERGY CONFERENCE, 1996. (BOSTON, MA, USA), 6. Oktober 1996 (1996-10-06), - 10. Oktober 2006 (2006-10-10) Seiten 514-521, XP002511195 IEEE NEW YORK, NY, USA. ISBN: 0-7803-3507-4

## Beschreibung

Die Erfindung betrifft eine Vorrichtung zum Ladungsabgleich einer Batterie, insbesondere einer Kfz-Batterie gemäß dem Oberbegriff des Patentanspruchs 1, sowie ein entsprechendes Verfahren zum Ladungsabgleich gemäß dem Oberbegriff des Patentanspruchs 8.

Bekannte Fahrzeugbatterien, wie z.B. NiMH- oder Blei-Säure-Batterien, bestehen aus mehreren in Reihe geschalteten Einzelzellen, die jeweils eine Teilspannung von wenigen Volt erzeugen. Die Anzahl der Zellen bestimmt die Nennspannung der Batterie, z.B. 12V, 24V oder 42V.

Aufgrund fertigungstechnischer Toleranzen oder thermischer Einflüsse kann der Ladezustand SOC (State of Charge) der einzelnen Zellen unterschiedlich hoch sein. Dies beeinträchtigt die Leistungsfähigkeit der Batterie erheblich, da diejenige Zelle mit dem geringsten Ladezustand und diejenige Zelle mit dem höchsten Ladezustand limitierend wirken. D.h. die Batterie kann nicht weiter entladen werden, als bis die Ladung der schwächsten Zelle verbraucht, und nicht weiter aufgeladen werden, als bis die stärkste Zelle voll aufgeladen ist.

Um die Leistungsfähigkeit der Batterie wieder voll herzustellen, ist es üblich, einen Ladungsabgleich der Batterie durchzuführen. Dabei wird die Batterie zunächst (mit einem großen Strom) voll aufgeladen und dann (mit einem geringen Strom) überladen, so dass auch die schwächeren, noch nicht vollen Zellen weiter aufgeladen werden, bis sich der Ladezustand langsam angleicht. In den bereits vollen Zellen wird dabei die überschüssige Energie in Wärme umgesetzt.

Die Energie für den Ladungsabgleich kommt entweder von einer zweiten Batterie, die die abzugleichende Batterie überlädt, oder aus einer sonstigen externen Quelle, wie z.B. dem öffentlichen Stromnetz. Im ersten Fall bedarf es einer zusätzlichen Batterie, was mit zusätzlichen Kosten und einem erhöhten Gewicht verbunden ist. Im letzteren Fall kann der Ladungsabgleich nur nach Anschluss an der externen Quelle durchgeführt werden.

Es ist daher die Aufgabe der vorliegenden Erfindung, eine Vorrichtung, sowie ein Verfahren zum Ladungsabgleich einer Batterie zu schaffen, die bzw. das besonders einfach und kostengünstig ist und ohne externe Quellen durchgeführt werden kann.

Gelöst wird diese Aufgabe gemäß der Erfindung durch die im Patentanspruch 1 sowie im Patentanspruch 8 angegebenen Merkmale. Weitere Ausgestaltungen der Erfindung sind Gegenstand von Unteransprüchen.

Ein wesentlicher Gedanke der Erfindung besteht darin, die einzelnen Zellen der Batterie in mehrere, vorzugsweise gleich große, Blöcke zusammenzufassen, die mit einem DC/DC-Wandler verbunden sind, und einen der Blöcke mittels der Energie aus einem anderen der Blöcke aufzuladen und zu überladen. Dadurch kann der Ladezustand der Zellen des einen Blocks abgeglichen werden, während der andere Block über den DC/DC-Wandler entladen wird. Der andere Block kann nachträglich genauso abgeglichen werden, falls es erforderlich ist. Dies hat den wesentlichen Vorteil, dass sich die Batterie quasi selbst abgleichen kann, ohne dass hierzu externe Energiequellen notwendig wären.

Nach dem Ladungsabgleich des einen Blocks, und gegebenenfalls eines weiteren Blocks, haben die Blöcke üblicherweise einen unterschiedlichen Ladezustand. Die einzelnen Blöcke werden daher untereinander abgeglichen, d.h. der Ladezustand der Blöcke wird aneinander angepasst. Hierzu kann z.B. ein Block mit dem niedrigeren Ladezustand von einem Block mit höherem Ladezustand aufgeladen werden, bis die Ladezustände im wesentlichen gleich sind.

Zur Bestimmung des Ladezustands einzelner Zellen oder Zellengruppen wird vorzugsweise die an der Zelle bzw. Gruppe abfallende Spannung gemessen und ausgewertet.

Ein System zum Ladungsabgleich einer Batterie umfasst eine in wenigstens zwei Blöcke aufgeteilte Batterie, wobei die Blöcke jeweils mit einem DC/DC-Wandler verbunden sind, sowie eine Elektronik, die den Ladezustand einer oder mehrerer Zellen bestimmt und den Ladungsabgleich steuert.

Ein Ladungsabgleich kann entweder in regelmäßigen Abständen (z.B. monatlich bis halbjährlich) oder.dann durchgeführt werden, wenn es erforderlich ist, insbesondere wenn der Ladezustand (SOC) verschiedener Zellen oder Zellengruppen zu stark von einander abweicht.

Gemäß einer bevorzugten Ausführungsform der Erfindung ist jeder der Blöcke in mehrere Zellengruppen (aus einer oder mehreren Zellen) unterteilt, deren Ladezustand durch Spannungsmessung oder in anderer Weise ermittelt wird. Wenn der Ladezustand der Gruppen zu stark voneinander abweicht, wird ein Ladungsabgleich durchgeführt, wobei der abzugleichende Block vom anderen Block aufgeladen wird. Danach kann, sofern erforderlich, auch der andere Block intern abgeglichen werden. Zuletzt werden dann die Blöcke untereinander abgeglichen.

Die Batterie ist vorzugsweise in zwei Blöcke aufgeteilt, die jeweils mit dem DC/DC-Wandler und einer Auswerte- und Steuerelektronik verbunden sind. Diese Aufteilung ist besonders einfach und kostengünstig.

Der DC/DC-Wandler ist vorzugsweise ein potentialgetrennter DC/DC-Wandler.

Ein Ladungsabgleich wird vorzugsweise nur dann durchgeführt, wenn der Ladezustand der Blöcke groß genug ist und die Blöcke z.B. wenigstens 3/4-tel voll geladen sind.

Die Auswerte- und Steuerelektronik kann z.B. als Steuergerät mit einer entsprechenden Software realisiert sein, die in der Lage ist, einen oder mehrere der vorstehend genannten Verfahrensschritte durchzuführen.

Die Unterteilung der Batterie in Blöcke und Zellengruppen ist vorzugsweise symmetrisch.

Die Erfindung wird nachstehend anhand der beigefügten Zeichnungen beispielhaft näher erläutert. Es zeigen:
Fig. 1 ein System zum Ladungsabgleich einer Batterie gemäß einer ersten Ausführungsform der Erfindung;
Fig. 2 ein Flussdiagramm der wesentlichen Verfahrensschritte zum Ladungsabgleich mit dem System von Fig. 1;
Fig. 3 ein System zum Ladungsabgleich einer Batterie gemäß einer zweiten Ausführungsform der Erfindung; und
Fig. 4 ein Flussdiagramm der wesentlichen Verfahrensschritte zum Ladungsabgleich mit dem System von Fig. 3.

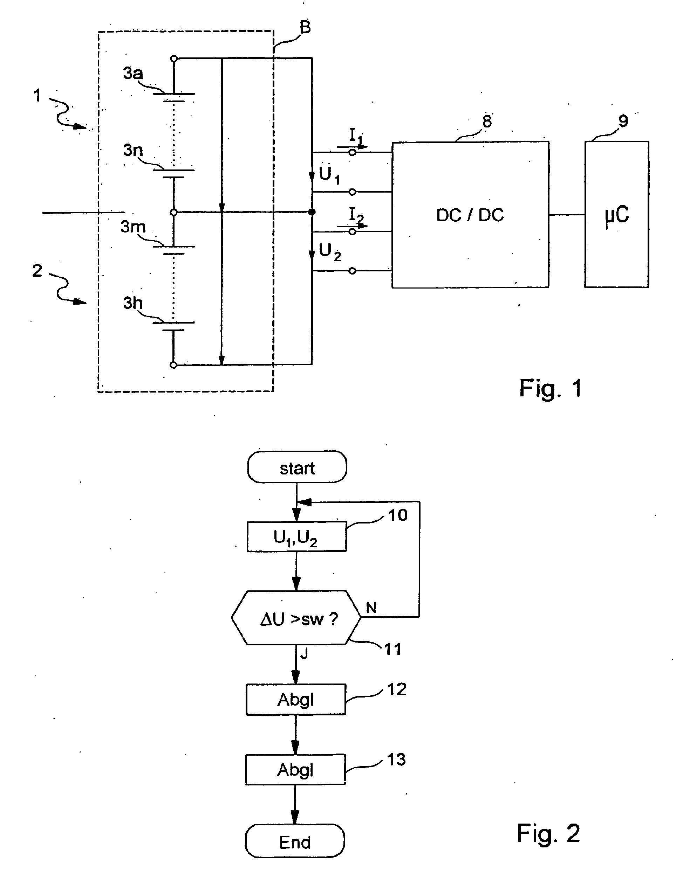

Fig. 1 zeigt eine schematische Darstellung einer Vorrichtung zum Ladungsabgleich einer Batterie B. Die Batterie B umfasst mehrere in Reihe geschaltete Batteriezellen 3a-3h, die jeweils eine Teilspannung erzeugen.

Die Batterie B ist in zwei Blöcke 1,2 unterteilt, die jeweils an einem potentialtrennenden DC/DC-Wandler 8 angeschlossen sind. Am DC/DC-Wandler 8 liegt somit die Teilspannung U₁ des ersten Blocks 1 und U₂ des zweiten Blocks 2 an. Die Anordnung umfasst außerdem eine Elektronik 9, die mit dem DC/DC-Wandler 8 verbunden ist und den Ladungsabgleichsprozess steuert.

Aufgrund chemischer der physikalischer Ursachen können einzelne Zellen 3a-3h einen unterschiedlichen Ladezustand (SOC) aufweisen. Die Leistungsfähigkeit der Batterie B wird dadurch erheblich beeinträchtigt. Mittels eines Ladungsabgleichs der Zellen 3a-3h kann die Leistungsfähigkeit der Batterie B wieder hergestellt werden.

Beim Ladungsabgleich werden die Zellen 3 des einen Blocks (z.B. Block 1) vom anderen Block (2) über den DC/DC-Wandler 8 aufgeladen. Der abzugleichende Block (1) wird dabei langsam aufgeladen, bis die stärkste Zelle 3 voll aufgeladen ist, und dann mit schwächerem Ladestrom überladen. Dadurch werden auch die schwächeren Zellen 3 voll aufgeladen. Danach kann der andere Block (2) durch Entladen des ersten Blocks (1) intern abgeglichen werden. Der Ladungsabgleichsprozess wird vom Steuergerät 9 gesteuert und überwacht.

Nach dem internen Ladungsabgleich der Blöcke 1,2 haben zwar die Zellen 3 eines Blocks 1,2 den gleichen Ladezustand, die Blöcke 1,2 selbst aber meist einen unterschiedlichen Ladezustand. Die beiden Blöcke 1,2 müssen daher noch untereinander abgeglichen werden. Zu diesem Zweck kann z.B. der eine Block mittels des anderen Blocks aufgeladen werden. Der DC/DC-Wandler wird dabei entsprechend angesteuert. Danach ist die Batterie B vollständig abgeglichen und kann von außen aufgeladen werden.

Ein Ladungsabgleich kann entweder in regelmäßigen zeitlichen Abständen oder nur bei Bedarf durchgeführt werden, z.B. wenn sich der Ladezustand einzelner Zellen 3 oder Zellengruppen 4-7 zu stark von anderen unterscheidet.

Fig. 2 zeigt ein Flussdiagramm mit den wesentlichen Verfahrensschritten bei einem Ladungsabgleich. In Schritt 10 werden zunächst die Teilspannungen U₁,U₂ der Blöcke 1,2 gemessen und in Schritt 11 die Spannungsdifferenz ΔU mit einem Schwellenwert SW verglichen. Sofern die Spannungsdifferenz ΔU kleiner ist als der Schwellenwert SW (Fall N) erfolgt kein Ladungsabgleich und die Teilspannungen U₁,U₂ werden weiter überwacht. Überschreitet die Spannungsdifferenz ΔU den vorgegebenen Schwellenwert SW, wird der Block 1,2 mit der geringeren Teilspannung mittels des anderen Blocks aufgeladen (Schritt 12) und intern abgeglichen. Sofern der Ladezustand der Blöcke 1,2 anderweitig ermittelt wird (nicht über Spannungsmessung), kann ein passender Ladezustandsschwellwert als Abgleichskriterium verwendet werden. Zum Abgleich des Blocks 1 erhöht der DC/DC-Wandler 8 die Teilspannung U₂ des Blocks 2. Gegebenenfalls kann danach auch der andere Block (2) intern abgeglichen werden.

In Schritt 13 werden schließlich die beiden Blöcke 1,2 untereinander abgeglichen, wobei der Block 1,2 mit der niedrigeren Teilspannung U₁,U₂ aufgeladen und der Block 1,2 mit der höheren Teilspannung U₁,U₂ entladen wird.

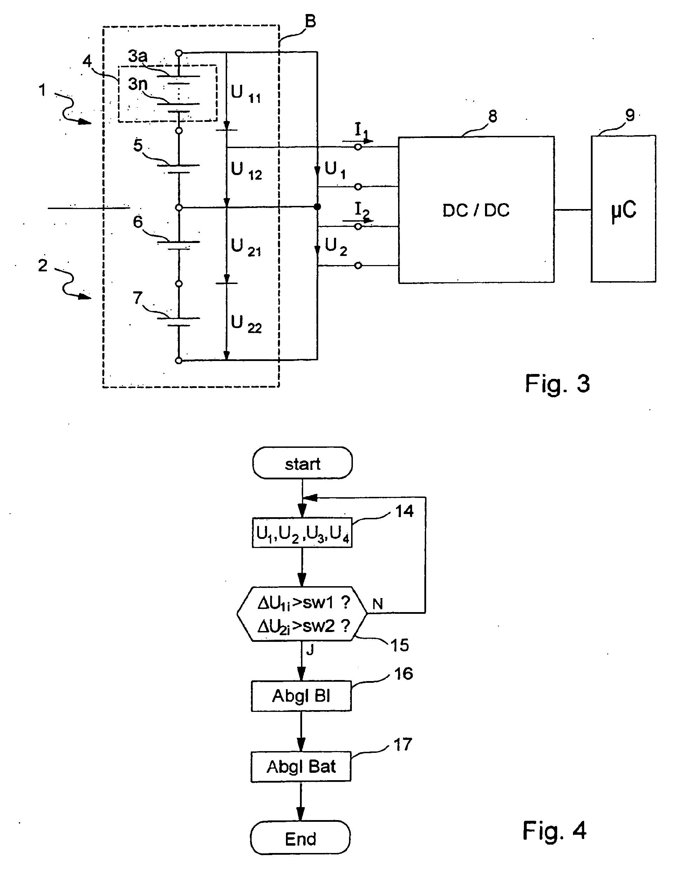

Fig. 3 zeigt eine Anordnung zum Ladungsabgleich einer Batterie B, ähnlich wie Fig. 1, bei der die Batterie B in zwei Blöcke 1,2 unterteilt ist. Jeder der Blöcke 1,2 ist wiederum in mehrere Gruppen 4-7 aus einer oder mehreren Zellen 3 unterteilt, wobei die Gruppen 5-7 aus Gründen der Übersichtlichkeit nur mit einem Zellensymbol dargestellt sind. Jede Gruppe 4-7 umfasst mehrere, vorzugsweise zwischen sechs und zehn, Zellen 3. Die Unterteilung eines Blocks 1,2 in Gruppen ermöglicht es, blockinterne Ladeunterschiede der Zellen 3 erkennen zu können.

Jede der Gruppen 4-7 ist mit der Elektronik 9 verbunden (die Leitungen sind nicht gezeigt), die die Gruppen-Teilspannungen U₁₁,U₁₂,U₂₁,U₂₂ überwacht. Weichen die Gruppen-Teilspannungen U₁₁,U₁₂,U₂₁,U₂₂ oder die anderweitig ermittelten Ladezustände der einzelnen Gruppen zu stark voneinander ab, wird ein Ladungsabgleich durchgeführt, wie er vorstehend beschrieben wurde. Anstatt der Teilspannungen kann auch der in anderer Weise bestimmte SOC der einzelnen Gruppen zum Start eines Abgleichs verwendet werden.

Fig. 4 zeigt ein Flussdiagramm der wesentlichen Verfahrensschritte eines Ladungsabgleichs bei einer Anordnung von Fig. 3. In einem ersten Schritt 14 des Verfahrens werden die Gruppen-Teilspannungen U₁₁,U₁₂,U₂₁,U₂₂ gemessen und in Schritt 15 überprüft, ob die Spannungsdifferenz ΔU₁ᵢ, ΔU₂ᵢ jeweils zweier Gruppen-Teilspannungen vorgegebene Schwellenwerte SW1 bzw. SW2 überschreitet. Falls die Schwellenwerte SW1, SW2 nicht überschritten werden, wird kein Ladungsabgleich durchgeführt und die Prozedur springt zurück zum Anfang. Falls einer der Schwellenwerte SW1,SW2 überschritten wird, wird der Block (z.B. Block 1) in Schritt 16 intern abgeglichen. D.h. der Block (1) wird mittels des anderen Blocks (2) geladen und überladen. Falls erforderlich wird auch der andere Block (2) intern abgeglichen.

In Schritt 17 werden schließlich die Blöcke 1,2 untereinander abgeglichen und auf den selben Ladezustand gebracht. Die Batterie B ist damit vollständig abgeglichen und kann nun voll aufgeladen werden.

### Bezugszeichenliste

- 1: erste Batterieblock
- 2: zweiter Batterieblock
- 3: Zellen
- 4-7: Zellengruppen
- 8: DC/DC-Wandler
- 9: Elektronik
- 10-17: Verfahrensschritte
- U₁,U₂: Block-Teilspannungen
- U₁₁, U₁₂, U₂₁, U₂₂: Gruppen-Teilspannungen

## Patentansprüche

1. Vorrichtung zum Ladungsabgleich einer Batterie (B), insbesondere einer Kfz-Batterie, mit mehreren in Reihe geschalteten Zellen (3), wobei mehrere der Zellen (3) in Blöcken (1,2) zusammengefasst sind, die jeweils mit einem DC/DC-Wandler (8) verbunden sind, und eine Elektronik (9) vorgesehen ist, mittels der ein Ladungsabgleich der Zellen (3) eines Blocks (1,2) durchgeführt werden kann, wobei einer der Blöcke (1,2) von einem anderen der Blöcke (1,2) über den DC/DC-Wandler (8) aufgeladen wird,
**dadurch gekennzeichnet,**
**dass** die Elektronik (9) derart eingerichtet ist, dass nach einem internen Ladungsabgleich eines Blocks (1,2) ein Abgleich der Blöcke (1,2) untereinander durchgeführt wird.

2. Vorrichtung nach Anspruch 1, **dadurch gekennzeichnet, dass** die Elektronik (9) den Ladezustand (SOC) einer oder mehrerer Zellen (3a-3h) eines Blocks (1,2) überprüft und bei Eintreten einer vorgegebenen Bedingung einen Ladungsabgleich durchführt, wobei einer der Blöcke (1,2) von einem anderen der Blöcke (1,2) über den DC/DC-Wandler (8) aufgeladen wird.

3. Vorrichtung nach Anspruch 1 oder 2, **dadurch gekennzeichnet, dass** die Elektronik (9) einen Ladungsabgleich durchführt, wenn der Unterschied des Ladungszustands einer ersten und einer zweiten Zellengruppe (4-7) größer ist als ein vorgegebener Schwellenwert.

4. Vorrichtung nach einem der vorhergehenden Ansprüche, **dadurch gekennzeichnet, dass** die Batterie (B) in zwei Blöcke (1,2) aufgeteilt ist, die jeweils mit dem DC/DC-Wandler (8) verbunden sind.

5. Vorrichtung nach einem der vorhergehenden Ansprüche, **dadurch gekennzeichnet, dass** jeder der Blöcke (1,2) mehrere Zellengruppen (4-7) aufweist, die jeweils mit der Elektronik (9) verbunden sind.

6. Vorrichtung nach einem der vorhergehenden Ansprüche, **dadurch gekennzeichnet, dass** der DC/DC-Wandler (8) ein potentialtrennender DC/DC-Wandler ist.

7. Vorrichtung nach einem der vorhergehenden Ansprüche, **dadurch gekennzeichnet, dass** ein Ladungsabgleich nur durchgeführt wird, wenn der Ladezustand der Blöcke (1,2) größer ist als ein vorgegebener Schwellenwert.

8. Verfahren zum Ladungsabgleich einer Batterie (B), insbesondere einer Kfz-Batterie, mit mehreren in Reihe geschalteten Zellen (3) von denen jeweils mehrere in Blöcken (1,2) zusammengefasst sind, die jeweils mit einem DC/DC-Wandler (8) verbunden sind, wobei der Ladezustand einer oder mehrerer Zellen (3a-3h) mittels einer Elektronik (9) überwacht und ein Ladungsabgleich der Zellen (3) eines Blocks (1,2) durchgeführt wird, wobei einer der Blöcke (1,2) von einem anderen der Blöcke (1,2) über den DC/DC-Wandler (8) aufgeladen und überladen wird,
**dadurch gekennzeichnet,**
**dass** nach dem internen Ladungsabgleich eines Blocks (1,2) die Blöcke (1,2) untereinander abgeglichen werden, wobei der eine Block (1,2) von einem anderen Block (1,2) aufgeladen wird.

9. Verfahren nach Anspruch 8, **dadurch gekennzeichnet, dass** ein Ladungsabgleich durchgeführt wird, wenn der Unterschied des Ladungszustands einer ersten und einer zweiten Zellengruppe (4-7) größer ist als ein vorgegebener Schwellenwert.

## Claims

1. Device for equalizing the charge of a battery (B), in particular a motor vehicle battery, having a plurality of cells (3) which are connected in series, wherein a plurality of the cells (3) are combined in blocks (1, 2) which are each connected to a DC/DC converter (8), and an electronic system (9) is provided by means of which charge equalization of the cells (3) of a block (1, 2) can be carried out, wherein one of the blocks (1, 2) is charged by another of the blocks (1, 2) via the DC/DC converter (8),
**characterized**
**in that** the electronic system (9) is configured in such a way that after internal charge equalization of a block (1, 2) equalization of the blocks (1, 2) with respect to one another is carried out.

2. Device according to Claim 1, **characterized in that** the electronic system (9) checks the state of charge (SOC) of one or more cells (3a-3h) of a block (1, 2), and when a predefined condition is met said device carries out charge equalization, wherein one of the blocks (1, 2) is charged by another of the blocks (1, 2) via the DC/DC converter (8).

3. Device according to Claim 1 or 2, **characterized in that** the electronic system (9) carries out charge equalization if the difference between the state of charge of a first and a second cell group (4-7) is greater than a predefined threshold value.

4. Device according to one of the preceding claims, **characterized in that** the battery (B) is divided into two blocks (1, 2) which are each connected to the DC/DC converter (8).

5. Device according to one of the preceding claims, **characterized in that** each of the blocks (1, 2) has a plurality of cell groups (4-7) which are each connected to the electronic system (9).

6. Device according to one of the preceding claims, **characterized in that** the DC/DC converter (8) is a potential-separating DC/DC converter.

7. Device according to one of the preceding claims, **characterized in that** charge equalization is carried out only if the state of charge of the blocks (1, 2) is greater than a predefined threshold value.

8. Method for equalizing the charge of a battery (B), in particular of a motor vehicle battery, having a plurality of cells (3) which are connected in series of which a plurality are respectively combined in blocks (1, 2) which are each connected to a DC/DC converter (8), wherein the state of charge of one or more of the cells (3a-3h) is monitored by means of an electronic system (9), and charge equalization of the cells (3) of a block (1, 2) is carried out, wherein one of the blocks (1, 2) is charged and excessively charged by the DC/DC converter (8),
**characterized**
**in that** after the internal charge equalization of a block (1, 2) equalization of the blocks (1, 2) with respect to one another is carried out, wherein the one block (1, 2) is charged by another block (1, 2).

9. Method according to Claim 8, **characterized in that** charge equalization is carried out if the difference between the state of charge of a first and a second cell group (4-7) is greater than a predefined threshold value.

## Revendications

1. Dispositif d'égalisation de charge d'une batterie (B), notamment d'une batterie de véhicule automobile, avec plusieurs cellules (3) connectées en série, plusieurs des cellules (3) étant rassemblées en blocs (1, 2) respectivement reliés à un convertisseur CC/CA (8) et un système électronique (9) étant prévu permettant de réaliser une égalisation de charge des cellules (3) d'un bloc (1, 2), un des blocs (1, 2) étant chargé par un autre des blocs (1, 2) via le convertisseur CC/CA (8), **caractérisé en ce que** le système électronique (9) est conçu de telle sorte qu'après une égalisation de charge interne d'un bloc (1, 2), une compensation des blocs (1, 2) entre eux est effectuée.

2. Dispositif selon la revendication 1, **caractérisé en ce que** le système électronique (9) contrôle l'état de charge (SOC) d'une ou de plusieurs cellules (3a-3h) d'un bloc (1, 2) et réalise une égalisation de charge en présence d'une condition prédéfinie, un des blocs (1, 2) étant ainsi chargé par un autre des blocs (1, 2) via le convertisseur CC/CA (8).

3. Dispositif selon la revendication 1 ou 2, **caractérisé en ce que** le système électronique (9) effectue une égalisation de charge lorsque la différence de l'état de charge d'un premier et d'un deuxième groupe de cellules (4-7) est supérieure à une valeur seuil prédéfinie.

4. Dispositif selon l'une quelconque des revendications précédentes, **caractérisé en ce que** la batterie (B) est divisée en deux blocs (1, 2) respectivement reliés au convertisseur CC/CA (8).

5. Dispositif selon l'une quelconque des revendications précédentes, **caractérisé en ce que** chacun des blocs (1, 2) comporte plusieurs groupes de cellules (4-7) respectivement reliés au système électronique (9).

6. Dispositif selon l'une quelconque des revendications précédentes, **caractérisé en ce que** le convertisseur CC/CA (8) est un convertisseur CC/CA à séparation de potentiel.

7. Dispositif selon l'une quelconque des revendications précédentes, **caractérisé en ce qu'**une égalisation de charge n'est effectuée que lorsque l'état de charge des blocs (1, 2) dépasse une valeur seuil prédéfinie.

8. Procédé d'égalisation de charge d'une batterie (B), notamment d'une batterie de véhicule automobile, avec plusieurs cellules (3) connectées en série, plusieurs des cellules étant respectivement rassemblées en blocs (1, 2) respectivement reliés à un convertisseur CC/CA (8), l'état de charge d'une ou de plusieurs cellules (3a-3h) étant surveillé à l'aide d'un système électronique (9) et une égalisation de charge des cellules (3) d'un bloc (1, 2) étant effectuée, un des blocs (1, 2) étant chargé par un autre des blocs (1, 2) via le convertisseur CC/CA (8), **caractérisé en ce qu'**après l'égalisation de charge interne d'un bloc (1, 2), les blocs (1, 2) sont égalisés entre eux, le premier bloc (1, 2) étant chargé par un autre bloc (1, 2).

9. Procédé selon la revendication 8, **caractérisé en ce qu'**une égalisation de charge est effectuée lorsque la différence de l'état de charge d'un premier et d'un deuxième groupe de cellules (4-7) dépasse une valeur seuil prédéfinie.
